# EUROPÄISCHE PATENTSCHRIFT

(11) **EP 0 640 009 B1**
(45) Veröffentlichungstag und Bekanntmachung des Hinweises auf die Patenterteilung: **25.10.1995**
(21) Anmeldenummer: 93909845.5
(22) Anmeldetag: 27.04.1993
(51) Int. Cl.: B01F 17/00, C11D 1/83, C11D 10/04, C11D 3/20

(54) **VERWENDUNG EINES SOLUBILISATORGEMISCHES ZUR HERSTELLUNG STARK ALKALISCHER, WÄSSRIGER LÖSUNGEN NICHT-IONISCHER TENSIDE**
USE OF A SOLUBILIZER MIXTURE FOR PREPARING STRONG ALKALINE, AQUEOUS SOLUTIONS OF NON-IONIC SURFACE ACTIVE AGENTS
UTILISATION D'UN MELANGE DE SOLUBILISEURS POUR FABRIQUER DES SOLUTIONS AQUEUSES TRES ALCALINES DE TENSIOACTIFS NON IONIQUES

(30) Priorität: 11.05.1992 DE 4215390
(43) Veröffentlichungstag der Anmeldung: 01.03.1995
(73) Patentinhaber: BASF Aktiengesellschaft, 67063 Ludwigshafen (DE)
(72) Erfinder: BAUR, Richard, D-6704 Mutterstadt (DE); STOECKIGT, Dieter, D-6700 Ludwigshafen (DE); NEUMANN, Hans-Werner, D-6838 Reilingen (DE)
(86) Internationale Anmeldenummer: EP9301012
(87) Internationale Veröffentlichungsnummer: WO9323158

(56) Entgegenhaltungen:
- EP-A- 0 202 638
- EP-A- 0 296 432
- DE-A- 2 754 831
- FR-A- 2 066 096
- FR-A- 2 411 027
- US-A- 3 956 161
- US-A- 5 091 101

## Beschreibung

Die Erfindung betrifft die Verwendung eines Solubilisatorgemisches zur Herstellung alkalischer, wäßriger Lösungen nicht-ionischer Tenside.

Nicht-ionische Tenside lassen sich nicht ohne weiteres in stark alkalische Tensidformulierungen einarbeiten. Sie werden vielmehr durch den hohen Elektrolytgehalt ausgesalzen, d.h. sie bilden eine von der wäßrigen getrennte Phase. Um sie trotzdem einarbeiten zu können, bedarf es eines Lösungsvermittlers. Als brauchbar für diesen Zweck haben sich Alkylarylsulfonate, z.B. Cumolsulfonat, En-Addukte des Maleinsäureanhydris an α-Olefine, beispielsweise 1,2-Dodecen sowie Diels-Alder-Addukte von Linolsäure an Acrylsäure (vgl. US-A-3 956 161) erwiesen.

Aus der DE-C-2 754 831 ist ferner die Verwendung von En-Addukten des Maleinsäureanhydrids an ungesättigte Fettsäuren oder deren Triglyceride bekannt.

Die Verwendung von Monocarbonsäuren mit 4 bis 10 C-Atomen in Reinigungsmitteln, die zusätzlich alkalisch reagierende Stoffe enthalten, ist bereits in DE-A-19 52 911 beschrieben. Die Anwendbarkeit dieser Solubilisatoren ist jedoch auf einige Tensidklassen beschränkt und außerdem durch die verwendbare Menge an Alkali begrenzt.

Der Erfindung lag daher die Aufgabe zugrunde, einen für möglichst viele Tensidklassen geeigneten Lösungsvermittler zu finden, der es zusätzlich erlaubt, Formulierungen mit höheren Alkalimengen herzustellen.

Überraschenderweise haben sich nun Mischungen aus einer langkettigen, ungesättigten dimeren oder oligomeren Fettsäure und einer C₆- bis C₁₂-Fettsäure als geeignete Lösungsvermittler erwiesen. Besonders geeignet sind Mischungen aus 60 bis 95 Gew.-%, insbesondere 80 bis 90 % der C₆- bis C₁₂-Fettsäure mit 5 bis 40 Gew.-%, insbesondere 10 bis 20 % der langkettigen, ungesättigten dimeren oder oligomeren Fettsäure, und vorzugsweise Mischungen aus 2-Ethylhexansäure oder i-Nonansäure und dimerer Ölsäure oder oligomeren Ölsäuren.

Als dimere/oligomere Fettsäuren kommen im Handel befindliche Produkte wie die Empol®-Typen der Fa. Henkel oder Pripol®-Typen der Fa. Unichema in Betracht. Allgemein sind dimere und oligomere C₁₀-C₂₂-Mono- oder Polycarbonsäuren geeignet, die nach an sich bekannten Verfahren hergestellt werden und überwiegend Dimere und Trimere enthalten.

Die Herstellung des erfindungsgemäßen Solubilisatorgemisches erfolgt durch Mischen der beiden Säurekomponenten bei normaler oder erhöhter Temperatur in handelsüblichen Mischapparaturen.

Die erfindungsgemäßen Lösungsvermittler eignen sich für die meisten nicht-ionischen Tenside, insbesondere für die zahlreich im Handel befindlichen Ethylenoxid- und Propylenoxid-Addukte sowie deren gemischte (meist nicht statistisch, sondern in Blockform) Addukte an mono-, di- und polyfunktionelle Alkohole, Amine und Polyamine, Aminoalkohole, Carbonsäuren, Säureamide oder Alkylphenole sowie für Blockpolymerisate von Ethylenoxid und Propylenoxid, bei denen das Propylenoxid auch ganz oder teilweise durch Butylenoxid ersetzt sein kann.

Unter stark alkalischen wäßrigen Lösungen sind im Sinne der Erfindung solche mit einem pH-Wert über 9, vorzugsweise über 12 zu verstehen. Aus wirtschaftlichen Gründen wird Natronlauge in aller Regel bevorzugt.

Es ist auch möglich, wäßrige Lösungen der besagten Tenside, welche das erfindungsgemäße Solubilisatorgemisch enthalten, mit einem pH-Wert im schwach sauren oder neutralen Bereich, etwa von 4 bis 7, herzustellen, zu lagern und in den Handel zu bringen und die Alkalischstellung erst kurz vor oder bei der Anwendung vorzunehmen.

Zur Prüfung der Wirksamkeit der Lösungsvermittler werden diese mit 0,1 bis 1, vorzugsweise 0,3 bis 1 Gew.-Teil Tensid pro Teil Lösungsvermittler und diese Gemische wiederum mit Natronlauge der gewünschten Konzentration versetzt. Es wird dann geprüft, ob eine optisch klare Lösung mit hohem Trübungspunkt entsteht.

In entsprechender Weise, wobei die relative Menge an Natronlauge natürlich variieren kann, werden die Lösungsvermittler in der Praxis eingesetzt.

In den folgenden Beispielen beziehen sich Teile und Prozente stets auf das Gewicht.

### Beispiele

5 Teile der Solubilisatoren A bis C werden mit 5 Teilen eines C₁₃-C₁₅-Oxoalkoholethoxylates (4 Mol Propylenoxid und 2 Mol Ethylenoxid pro Mol Fettalkohol) und 10 bis 15 Teilen Natriumhydroxid und Wasser unter Rühren vermischt und visuell beurteilt. Durch Bestimmung der Trübungspunkte der Formulierung läßt sich das Solubilisierungsverhalten zusätzlich beurteilen.
- Solubilisator A:: 10 Teile Ölsäure
90 Teile 2-Ethylhexansäure
- Solubilisator B:: 10 Teile dimere/trimere Ölsäure (79 % Dimer/19 % Trimer)
90 Teile 2-Ethylhexansäure
- Solubilisator C:: 10 Teile dimere/trimere Ölsäure (75 % Dimer/22 % Trimer)
90 Teile 2-Ethylhexansäure

### Prüfung in alkalischer Formulierung

| Teile | Solubilisator | | |
|---|---|---|---|
| | A | B | C |
| 5 Tensid | | | |
| 5 Solubilisator | getrennt | klar | klar |
| 5 Natriumhydroxid | | 47°C Trübungspunkt | 42°C Trübungspunkt |
| 85 Wasser | | | |
| 5 Tensid | getrennt | klar | klar |
| 5 Solubilisator | | 93°C Trübungspunkt | 92°C Trübungspunkt |
| 10 Natriumhydroxid | | | |
| 80 Wasser | | | |
| 5 Tensid | getrennt | klar | klar |
| 5 Solubilisator | | >100°C Trübungspunkt | 57°C Trübungspunkt |
| 15 Natriumhydroxid | | | |
| 75 Wasser | | | |

Den Beispielen ist zu entnehmen, daß mit Solubilisator A bereits bei niedriger Natriumhydroxidkonzentration keine homogene Formulierung herstellbar ist.

Mit den erfindungsgemäßen Solubilisatoren B und C erhält man selbst mit 15 Teilen Natriumhydroxid noch stabile klare Formulierungen mit hohen Trübungspunkten.

Bei weiterer Erhöhung der Natriumhydroxidkonzentration sind noch mit den erfindungsgemäßen Solubilisatoren B und C homogene Formulierungen erhältlich (Grenzkonzentration des Natriumhydroxids bei Solubilisator A 4,5 Teile, bei Solubilisator B 16,5 Teile und bei Solubilisator C 15,5 Teile).

## Patentansprüche

1. Verwendung einer Mischung aus einer langkettigen, ungesättigten dimeren oder oligomeren Fettsäure und einer C₆- bis C₁₂-Fettsäure als Solubilisator oder Lösungsvermittler für nichtionische Tenside in alkalisch wäßrigen Lösungen.

2. Verwendung gemäß Anspruch 1, dadurch gekennzeichnet, daß man 60 bis 95 Gew.-% der C₆- bis C₁₂-Fettsäure mit 5 bis 40 Gew.-% der langkettigen, ungesättigten dimeren oder oligomeren Fettsäure mischt.

3. Verwendung gemäß Anspruch 1, dadurch gekennzeichnet, daß man 80 bis 90 Gew.-% der C₆- bis C₁₂-Fettsäure mit 10 bis 20 Gew.-% der langkettigen, ungesättigten dimeren oder oligomeren Fettsäure mischt.

4. Verwendung gemäß Anspruch 1, dadurch gekennzeichnet, daß man als C₆- bis C₁₂-Fettsäuren 2-Ethylhexansäure oder i-Nonansäure einsetzt.

5. Verwendung gemäß Anspruch 1, dadurch gekennzeichnet, daß man als langkettige, ungesättigte dimere oder oligomere Fettsäure dimere oder trimere Ölsäure oder Gemische dieser Säuren einsetzt.

## Claims

1. The use of a mixture of a long-chain unsaturated dimeric or oligomeric fatty acid and of a C₆-C₁₂ fatty acid as solubilizer or solubility promoter for nonionic surfactants in alkaline aqueous solutions.

2. The use as claimed in claim 1, wherein from 60 to 95% by weight of the C₆-C₁₂ fatty acid are mixed with from 5 to 40% by weight of the long-chain unsaturated dimeric or oligomeric fatty acid.

3. The use as claimed in claim 1, wherein from 80 to 90% by weight of the C₆-C₁₂ fatty acid are mixed with from 10 to 20% by weight of the long-chain unsaturated dimeric or oligomeric fatty acid.

4. The use as claimed in claim 1, wherein 2-ethylhexanoic acid or i-nonanoic acid is used as C₆-C₁₂ fatty acids.

5. The use as claimed in claim 1, wherein dimeric or trimeric oleic acid or mixtures of these acids are used as long-chain unsaturated dimeric or oligomeric fatty acid.

## Revendications

1. Utilisation d'un mélange d'un acide gras dimérique ou oligomérique, insaturé, à longue chaîne et d'un acide gras en C₆ à C₁₂ à titre de dissolvant ou d'agent conférant de la solubilité pour des agents tensioactifs ou surfactifs non ioniques dans des solutions aqueuses alcalines.

2. Utilisation suivant la revendication 1, caractérisée en ce que l'on mélange de 60 à 95% en poids de l'acide gras en C₆ à C₁₂ à 5 à 40% en poids de l'acide gras dimérique ou oligomérique, insaturé, à longue chaîne.

3. Utilisation suivant la revendication 1, caractérisée en ce que l'on mélange de 80 à 90% en poids de l'acide gras en C₆ à C₁₂ à 10 à 20% en poids de l'acide gras dimérique ou oligomérique, insaturé, à longue chaîne.

4. Utilisation suivant la revendication 1, caractérisée en ce que l'on utilise l'acide 2-éthylhexanoïque ou l'acide i-nonanoïque à titre d'acide gras en C₆ à C₁₂.

5. Utilisation suivant la revendication 1, caractérisée en ce que l'on utilise l'acide oléique dimérique ou l'acide oléique trimérique, ou des mélanges de ces acides à titre d'acide gras dimérique ou oligomérique, insaturé, à longue chaîne.
